# EUROPEAN PATENT APPLICATION

(11) **EP 3 401 649 A1**
(43) Date of publication of application: **14.11.2018**
(21) Application number: 17169941.6
(22) Date of filing: 08.05.2017
(51) Int. Cl.: G01F 1/66

(54) **FLOW METER WITH TWO SEPARATE INSERTS**

(71) Applicant: Kamstrup A/S, 8660 Skanderborg (DK)
(72) Inventor: ALFREOSDOTTIR, Nanna Karen, 8700 Horsens (DK)
(74) Representative: Plougmann Vingtoft a/s

(57) **Abstract**

An ultrasonic flow meter for measuring a flow rate of a fluid. The meter has a polymeric housing (H) forming a flow tube with first and second fluid openings (O1, 02). A first face (F1) is formed in the flow tube by a reduction in cross-sectional area at a distance d1 from the first fluid opening (O1). A second face (F2) is formed by a reduction in cross-sectional area at a second distance d2 from the first fluid opening (O1), wherein d1>d2, and wherein a cross-sectional area at d1 is smaller than a cross-sectional area at d2. A first insert (I1) forms a measuring tube (MT) and a first ultrasound reflector holder (RH1) arranged outside a first end of the measuring tube (MT). A flange (FL1) if the first insert (I1) is arranged to face the first face (F1). A second insert (I2) forms a second ultrasound reflector holder (RH2). A flange (FL2) of the second insert (I2) is arranged to face the second face (F2). First and second ultrasound transducers are arranged to transmit and receive ultrasonic signals through a fluid flow measuring channel (MC) formed by the measuring tube (MT) via first and second ultrasound reflectors (R1, R2) fixed at the respective ultrasound reflector holders (RH1, RH2), so as to allow ultrasonic measurement of a fluid flowing through the measuring tube (MT). E.g. the first and second inserts (I1, I2) are by means of ultrasound welding.

## Description

### FIELD OF THE INVENTION

The invention relates to a flow meter, such as for ultrasonic measurements of fluid flow as used e.g. in a consumption meter.

### BACKGROUND OF THE INVENTION

Ultrasonic flow meters for measuring fluid flow in connection with charging of a consumed quantity (e.g. heat, cooling, water or gas) are required to measure fluid flow at a high precision. Still, it is preferred that such meters can be manufactured in a low cost automated mass production.

EP 0 897 101 B1 by Electrowatt Technology discloses an ultrasonic flow meter, with separate reflector inserts which are arranged for insertion into the housing from respective ends of the through-going hole of the housing. The reflector inserts are fixed in a longitudinal direction by means of snap engagement. The flow meter disclosed in EP 0 897 101 B1 requires a number of assembly steps, since first one of the inserts must be snapped into position from one end of the housing, then the measuring tube must be inserted from the opposite end, and finally the second insert must be snapped into position. Thus, a number of single elements are required, and several steps are required in the final assembly state of the meter. Still further, the insert is not fixed in a rotational direction in relation to the housing.

EP 2 513 610 B1 by Kamstrup discloses an ultrasonic flow meter with a monolithic polymeric housing with a flow tube. A pre-fabricated element with ultrasound reflectors at each end of a measuring tube is inserted in the polymeric housing.

### SUMMARY OF THE INVENTION

It may be seen as an object of the present invention to provide an improved ultrasonic flow meter which has a low level of complexity regarding manufacturing, in particularly in connection with assembly of the flow meter, being suited for high precision flow measurements and still provide a low fluid pressure loss in spite of compact dimensions.

In a first aspect, the invention provides an ultrasonic flow meter arranged to measure a flow rate of a fluid, the meter comprising
- a housing of a polymeric material, wherein the housing comprises a flow tube forming a flow channel with first and second fluid openings at each end of the flow tube, wherein a first face is formed in the flow tube by a reduction in cross-sectional area of the flow channel at a first distance from the first fluid opening, wherein a second face is formed in the flow tube by a reduction in cross-sectional area of the flow channel at a second distance from the first fluid opening, wherein the first distance is larger than the second distance, and wherein a cross-sectional area of the flow channel at the first distance is smaller than a cross-sectional area of the flow channel at the second distance,
- a first insert of a polymeric material, the first insert forming a measuring tube and a first ultrasound reflector holder arranged outside a first end of the measuring tube, wherein a flange structurally connected to the measuring tube is arranged to face the first face, and
- a second insert of a polymeric material, the second insert forming a second ultrasound reflector holder structurally connected to a flange arranged to face the second face,
further comprising first and second ultrasound transducers arranged to transmit and receive ultrasonic signals through the measuring tube via first and second ultrasound reflectors fixed at the respective ultrasound reflector holders, so as to allow ultrasonic measurement of a fluid flowing through the measuring tube.

Such flow meter unit is advantageous, since it can be manufactured in a highly automated manufacturing process with a limited number of sub-assembly operations. The inserts can be manufactured separate from the housing without the need for any sub-assembly steps, and the inserts can then be secured in the housing by insertion from one end of the flow tube of the housing, i.e. the first fluid opening. Thus, manufacturing is facilitated, since there is no need to turn the housing during inserting and fixing both inserts.

Due to the well-defined faces in the flow tube of the housing, the first and second inserts, and thereby the ultrasound reflectors, will be positioned precisely relative to each other in a longitudinal direction. This means that the length between the ultrasound reflectors is determined with a high precision, and this is an important parameter for high precision ultrasound flow measurements. Even further, if the first and second inserts are fixed to the faces of the flow tube, e.g. by ultrasonic welding, the length between the ultrasound reflectors will remain stable over time, irrespective of any temperature changes.

Further, with the two inserts being inserted in the flow tube of the housing from one side only, the resulting position and orientation of the ultrasound reflectors will only be minimally influenced by a possible curvature of the flow tube. Thus, the flow meter is rather tolerant to production tolerances with respect to a possible curvature of the flow tube.

With respect to fluid pressure loss, the flow meter of the first aspect is advantageous, since there is no structural connection between the two inserts, each of which carries an ultrasound reflector. Thus, eliminating such potentially bulky structure for connecting the two ultrasound reflectors, valuable space is saved, which helps to keep the fluid pressure loss low. At the same time, this allows space for integrating a flow straightening structure at the inlet side, which will help to increase the dynamic range of the flow meter, still with a low fluid pressure loss.

Further, the structure of the flow tube and the inserts allow various possibilities for fixing the inserts inside the flow tube, including mechanical locking mechanisms, gluing, or ultrasonic welding. Especially, fixing the inserts by gluing or ultrasonic welding may be preferred compared to fixing by means of snap or click type locking mechanisms, since it is possible to provide a more precise control position and orientation of ultrasound reflectors in the flow tube. Due to the faces formed inside the flow tube, the inserts will have fixed positions relative to the openings for the associated ultrasonic transducer, and thus it is ensured that the reflectors have a fixed position relative to the ultrasonic transducers, once they are mounted in these openings. Still, in case of ultrasonic welding, this precision fixing can be obtained without the need for the use of any glue which can be problematic in relation to a water meter for measuring flow of drinking water. Thus, the meter is suitable as a consumption meter for measuring flow of water in case of ultrasonic welding or other non-toxic fixing methods for fixing the inserts in the flow tube.

Still further, the flow meter is advantageous, since it is possible to manufacture one standard size of housing which can be used for different meters suited for respective dimensions of fluid flow, since this can be determined by selecting a measurement tube insert with a suitably sized inner diameter.

In the following preferred features and embodiments will be described.

In preferred embodiments, the flange of the first insert is fixed to the first face by means of ultrasonic welding. Further, most preferably, the flange of the second insert is also fixed to the second face by means of ultrasonic welding. Hereby, the faces formed in the flow tube are utilized for fixing the inserts by means of ultrasonic welding, and for this purpose they may be formed with energy directing structures. Ultrasonic welding provides an endurable and high precision fixing without the need for the use of any glue which can be problematic in relation to a water meter for measuring flow of drinking water. Thus, in these embodiments, the meter is suitable as a consumption meter for measuring flow of water. Further, the process of ultrasonic welding helps to reduce any possible effect of a possible curvature of the flow tube of the housing, since the heating process of the ultrasonic welding tool will help to correct the positioning of the inserts irrespective of any possible curvature of the flow tube.

Alternatively, the flange structurally connected to the measuring tube may be fixed to the first face by means of glue. Further, the flange structurally connected to second ultrasound reflector holder may also be fixed to the second face by means of glue. E.g. a non-toxic glue may be preferred.

Preferably, the first and second inserts comprise respective portions serving to engage with matching portions of the flow tube of the housing, so as to determine angular position of the first and second inserts in the flow tube. This may be in the form of matching indentations and protrusions to allow a precise and easy positioning of the second insert during manufacturing. Especially, a flat portion of the flange of the first insert may serve to engage with a matching flat portion of the flow tube, so as to fix angular position of the first insert in the flow tube. This helps to allow an efficient yet precise positioning of the first insert during an automated manufacturing process.

The first and second faces may form respective surfaces which are perpendicular to or substantially perpendicular to a longitudinal direction of the flow tube, i.e. with an angle of 90° or around 90° with an axis in a longitudinal direction of the flow tube. This may be preferred e.g. for gluing or ultrasound welding the inserts to the respective first and second faces. However, it is to be understood that the faces may form surfaces which provide angles with the longitudinal direction of the flow tube of such as 30° to 90°, or 50° to 90°.

The first and second faces may form respective circumferential faces to which the respective first and second inserts are fixed, e.g. by means of ultrasonic welding or gluing. Such circumferential faces may angularly extend on the entire inner surface of the flow tube or only a part thereof. Especially, it may be preferred that the first face angularly extends on the entire inner surface of the flow tube, so as to allow a fluid tight fixing between the flange of the first insert and the first face in order to hinder any fluid flow in the space between the measuring tube and the flow tube.

The first insert has one or more outer protrusions at or near the first end of the measuring tube, so as to control a position of the first end of the measuring tube inside the flow tube. Such one or more protrusions, preferably two or more angularly distributed at the periphery of the measuring tube end, serve to support the first end of the measuring tube, and thereby also to the first ultrasound reflector holder, to the inner wall of the flow tube, thereby allowing a precise position of the first ultrasound reflector in the flow channel.

At the first insert, the flange structurally connected to the measuring tube is preferably positioned at a second end of the measuring tube, i.e. opposite the first end of the measuring tube. At the second insert, the flange structurally connected to the second ultrasound reflector holder is positioned at an end of the ultrasound reflector holder opposite an end arranged to hold the second ultrasound reflector.

The measuring tube and the flow tube of the housing are preferably shaped so as to provide a space between the measuring tube and the flow tube, wherein said space is arranged to be fluid filled during operation of the flow meter. Especially, only the first end of the first insert may have fluid opening(s) to allow fluid to enter the space between the measuring tube and the flow tube. The flange of the first insert is preferably fixed to the first face so as to provide a fluid tight connection to the flow tube, thereby hindering a flow of fluid in the space between the measuring tube and the flow tube.

It may be preferred that the first ultrasound reflector holder and the measuring tube are provided as separate elements that can be assembled to form the first insert. However, preferably, the first ultrasound reflector holder and the measuring tube are formed as one single monolithic element of a polymer. Preferably, such element is cast or moulded, and preferably the first ultrasound reflector holder has a tail fin to improve fluid flow, thereby resulting in a lower fluid flow pressure drop in the flow meter.

The second insert may form a flow straightening structure arranged to straighten flow of fluid passing the straightening structure. Preferably, the first fluid opening serves as fluid inlet for the meter, thereby allowing the flow straightening structure, e.g. fins, of the second insert to improve flow measurement precision.

By forming the first and second faces as step-wise indentations of the cross-sectional area of the flow tube, it is possible to manufacture the housing by casting the housing as one single monolithic polymeric element without the need for further processing steps.

The housing may comprise a third face of the flow tube being positioned at a third distance from the first fluid opening, wherein the second distance is larger than the third distance, wherein the second face forms a cross-sectional area of the flow channel which is smaller than a cross-sectional area of the flow channel formed by the third face. Especially, the meter may comprise a fluid filter designed to stop passage of particles larger than a predetermined size, wherein the fluid filter comprises a flange arranged to face the third face, e.g. this flange may be ultrasound welded to the third face, or this flange may not be fixed to the third face, since the fluid filter function is not dependent on precise position and angular fixing, and further the filter may more easily be replaced.

The measuring tube preferably forms a straight fluid flow measurement channel with a circular cross-sectional area. Especially, at least 50% of a total length of the measuring tube forms a straight fluid flow measurement channel with a constant circular cross-sectional area.

The first ultrasound reflector holder is preferably fixed to a limited portion of the first end of the measuring tube only, and wherein the ultrasound reflector holder is shaped as a fluid dynamic fin. This helps to keep the total fluid flow pressure drop of the meter low.

In preferred embodiments, the cross-sectional area of the flow channel of the housing is circular. Especially, the inner diameter of the flow channel may be within the interval 5 mm to 150 mm, such as within the interval 10 mm to 100 mm, such as within the interval 25 mm to 75 mm, such as 50 mm, measured at the first fluid opening. The measurement tube may especially have a measurement channel with a diameter within the interval of 5-15 mm, however diameters smaller than 5 mm and larger than 15 mm are of course possible. The flow meter design is advantageous for allowing one size of flow channel to be used together with measurement tubes with different measurement channel diameter. Hereby, one single housing component can be used for flow meters specified for different flow capacities.

The reflector arrangement and the measuring tube arrangement may be provided in one single moulding process to form the first insert. One design of a reflector arrangement can be combined with different measuring tube arrangements, e.g. having different measuring channel diameters, thus allowing a high versatility of single pre-fabricated parts.

The polymeric material may be selected from, but is not limited to, the group consisting of polyphenylene sulphide (PPS), polyether sulphone (PES) and Polyether Sulphone (PSU). It is noted that the properties of the polymeric materials can be customized by adding certain additives prior to the moulding process, affecting the material properties such as stiffness, density or the acoustic impedance. Examples of potential additives include reinforcement materials such as glass fibres, density increasing fillers such as chalk (calcium carbonate, CaCO3) or powdery stainless steel raising the acoustic impedance of the material.

The same polymeric material may be used for the housing, the first and second inserts. The ultrasound reflectors to be mounted on (or imbedded in the material of) the first and second ultrasound reflector holders are preferably made of metal.

In preferred embodiments, the ultrasonic flow meter is or is part of an ultrasonic consumption meter such as for charging purposes. Especially, the consumption meter may be a water meter, gas meter, heat meter, or cooling meter. The consumption meter may be a legal meter, i.e. a meter which is subdued to regulatory demands. Such regulatory demands may be demands to the precision of the measurements.

In a second aspect the invention provides a method of manufacturing an ultrasonic flow meter according to the first aspect. The method comprises
providing the housing,
providing the first insert,
providing the second insert,
inserting the first insert in the first fluid opening of the housing, so that the flange structurally connected to the measuring tube faces the first face, and
inserting the second insert in the first fluid opening of the housing, so that the flange structurally connected to the second ultrasound reflector holder faces the second face.

Such method of manufacturing is suited to manufacture high precision flow meters in an automated or semi-automated manufacturing process.

### BRIEF DESCRIPTION OF THE DRAWINGS

Embodiments of the invention will be described, by way of example only, with reference to the drawings, in which
Figs. 1a and 1b illustrate 3D section views of a flow meter housing embodiment,
Figs. 2a and 2b illustrate section views of the same housing embodiment as Figs. 1a and 1b,
Fig. 3 illustrates a section view of the same housing embodiments as in Figs. 1 and 2 with ultrasound reflector holders and measurement tube embodiments mounted therein,
Fig. 4 illustrates a 3D view of an embodiment with the housing and the two inserts prior to insertion in the through-going hole of the housing,
Figs. 5a-5c illustrate various view of an ultrasound reflector holder insert embodiment: a 3D view, and views from respective ends,
Figs. 6a-6c illustrate various view of an embodiment of the combined measuring tube and ultrasound reflector holder insert: a 3D view, and views from respective ends,
Fig. 7 illustrates steps of a method of manufacturing embodiment, and
Figs. 8a and 8a illustrate an example of an energy director on the faces inside the flow tube for directing energy during ultrasonic welding for fixing flanges of the inserts.

### DESCRIPTION OF EMBODIMENTS

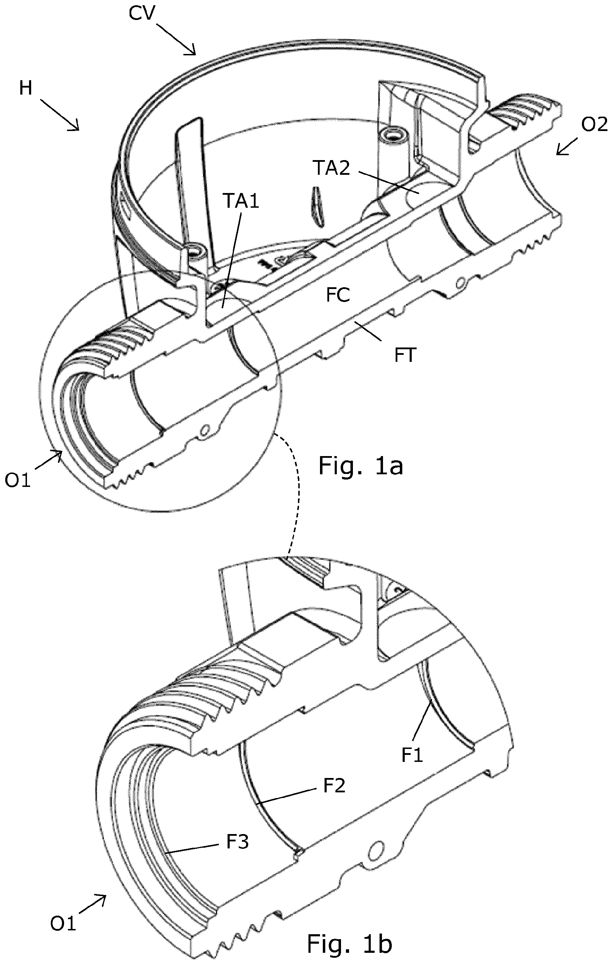

Figs. 1a, 1b, 2a, 2b and 3 all show views of the same ultrasonic flow meter embodiment to be described in the following. A polymeric housing H forms a monolithic structure comprising a portion forming a flow tube FT and a portion forming a generally cup shaped cavity CV arranged to house first and second ultrasound transducers at respective surfaces TA1, TA2 as well as a measurement circuit, battery and communication module (not shown). The flow meter is arranged to measure flow rate of a fluid, e.g. water. Especially, the flow meter may form part of a consumption meter or utility meter, e.g. a water meter, for charging purposes. The cavity CV can further house a communication module for radio frequency communication of measured flow rate data. The flow tube FT portion is arranged at a lower part of the cup shaped cavity CV, and the cup shaped cavity CV forms an opening at its upper part to be covered by a water tight lid. E.g. this opening can be circular, and it is arranged to allow mounting of the ultrasound transducers as well as measurement circuit connected to the ultrasound transducers, a battery, a communication module etc.

The flow tube FT forms a straight flow channel FC with a circular cross section and with first and second fluid openings O1, 02 at each end of the flow tube FT. Outer portions of the ends of the flow tube FT are threaded, thereby allowing connection to pipes of a fluid installation.

Inside the flow tube FT first, second and third circumferential faces F1, F2, F3 are formed by a step-wise reduction of cross-sectional area of the flow channel, i.e. a step-wise reduction in diameter of the flow channel FC, starting from the first fluid opening O1. The three faces F1, F2, F3 all face towards the first fluid opening O1. The first face F1 is formed by a reduction in cross-sectional area of the flow channel FC at a first distance d1 from the first fluid opening O1. The second face F2 is formed by a reduction in cross-sectional area of the flow channel FC at a second distance d2 from the first fluid opening O1. The third face F3 is formed by a reduction in cross-sectional area of the flow channel FC at a third distance d3 from the first fluid opening O1. Regarding the distances d1>d2>d3. A cross-sectional area of the flow channel at the first distance d1 is smaller than a cross-sectional area of the flow channel FC at the second distance d2, which is again smaller than a cross-sectional area of the flow channel FC at the third distance d3. The faces F1, F2, F3 can especially be formed to provide plane surfaces perpendicular to a longitudinal direction of the flow tube FT.

With this structure of the housing H, it is possible to mould the polymeric housing with flow tube and cavity VC as one single monolithic element, which is preferably with respect to low manufacturing costs, as well as with respect to ensure protection of the sensitive components (such as ultrasound transducers, measurement circuit, battery) from humidity caused by leaking fluid due to the lack of any potential leaks between separate elements serving to carry the pressure of the fluid.

A first insert I1 of a polymeric material forms a measuring tube MF, and a first ultrasound reflector holder RH1 arranged outside a first end MTE1 of the measuring tube MT. A flange FL1 is structurally connected to the measuring tube (MT) at its second end MTE2, and this flange FL1 is arranged to face the first face F1 after the first insert I1 has been inserted into the flow tube FT from the first fluid opening O1.

A second insert I2 of a polymeric material forms a second ultrasound reflector holder RH2 structurally connected to a flange FL2 arranged to face the second face F2 after the second insert I2 has been inserted into the flow tube FT from the first fluid opening O1. In preferred embodiments, the flange FL1 of the first insert I1 is fixed to the first face F1 by means of ultrasonic welding, and likewise the flange FL2 of the second insert I2 is fixed to the second face F2 by means of ultrasonic welding.

The faces F1 and F2 formed by the structure of the flow tube FT and thus being integral with the housing H structure, serve to provide a precise positioning of the inserts I1, I2 relative to the housing structure H. Such precise positioning is important with respect to ensure precise transmission of ultrasound signals in spite of various production tolerances. By fixing the inserts I1, I2 to the faces F1, F2 by means of ultrasonic welding, the ultrasound reflector holders RH1, RH2, and thus also the ultrasound reflectors R1, R2, are precisely fixed to the housing H structure, and thereby remains at this position without any angular or longitudinal displacement of the ultrasound reflectors R1, R2 in the flow tube FT over time, which may disturb the ultrasound signal transmission and cause imprecise flow rate measurements. Even in cases where production tolerances result in a slightly curved flow tube FT, the fact that the two faces F1, F2 are positioned with a rather short distance, such curvature will only result in a minor mal-orientation of the ultrasound reflectors R1, R2. Further, ultrasonic welding is a non-toxic means for fixing or attaching the inserts I1, I2 and therefore allows the flow meter to function as a water meter for measuring flow of drinking water.

With this structure, the flow meter is advantageous for manufacturing in an automated or semi-automated production, since the first and second inserts I1, I2 can both be inserted from the same opening, i.e. the first fluid opening O1. This eliminates the need for turning the housing H during manufacturing. Still with ultrasonic welding, a stable and yet precise and positioning can be obtained also in a low cost manufacturing process.

The ultrasound transducers are arranged for being positioned at the surfaces TA1, TA2 in the cavity CV of the housing H and being arranged to transmit and receive ultrasonic signals through the measuring channel MC formed by the measuring tube MT via first and second ultrasound reflectors R1, R2 fixed at the respective ultrasound reflector holders RH1, RH2, so as to allow ultrasonic measurement of a fluid flowing through the measuring tube MT. Thus, the ultrasound transducers are arranged to transmit ultrasound signals through the wall of the flow tube FT.

The third face F3 can be used to face, and e.g. fix, a flange of a fluid filter (not shown) for hindering particles of a given size in entering the measuring tube MT.

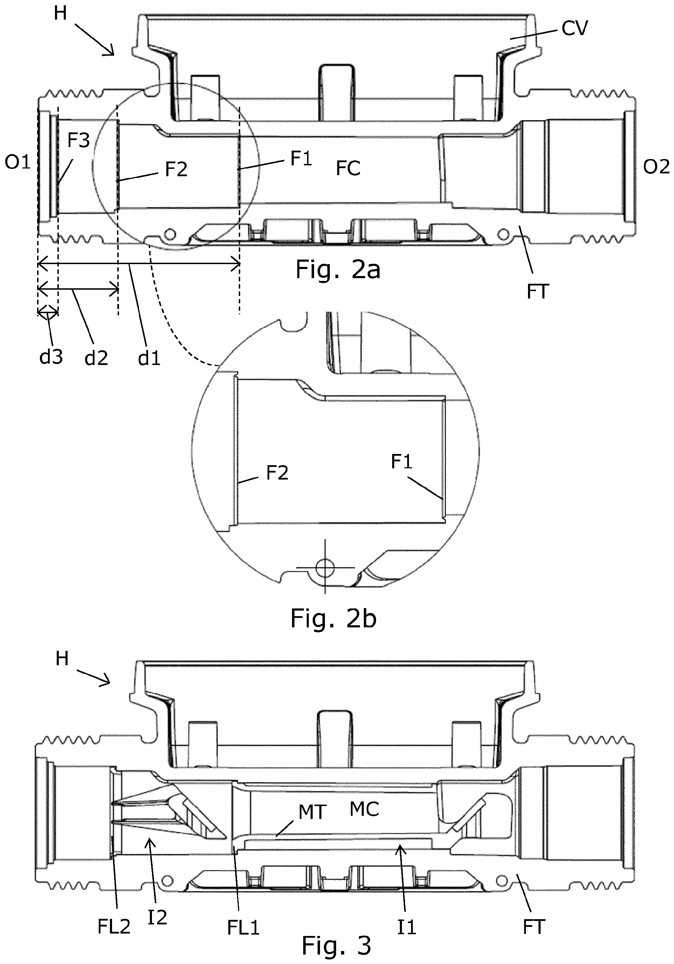

As can be seen in Fig. 3, where the inserts I1, I2 are mounted in the flow tube FT, the measuring tube MT is shaped so as to provide a space between the measuring tube MT and the flow tube FT of the housing (H), wherein said space is arranged to be fluid filled during operation of the flow meter.

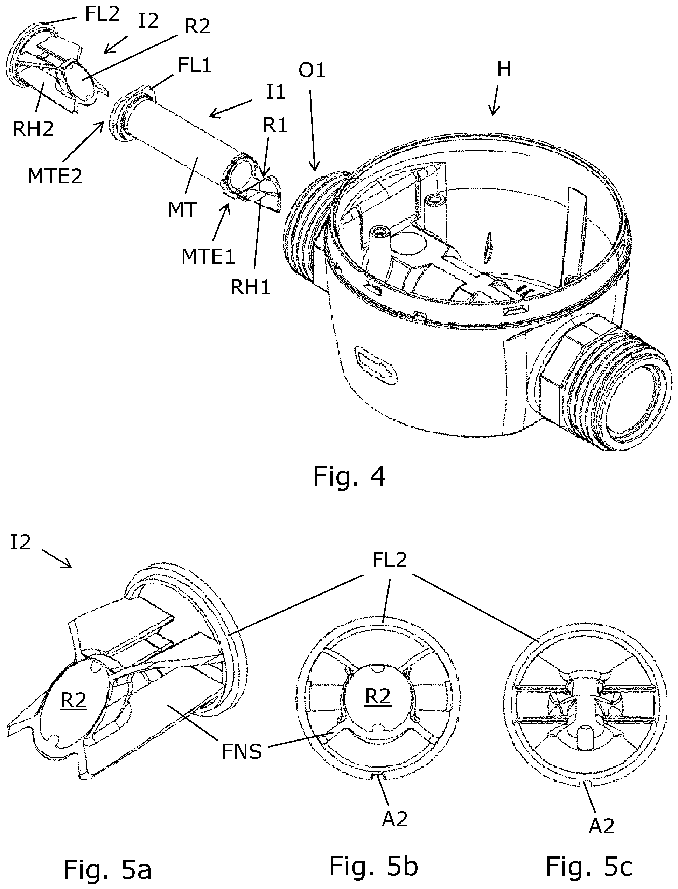

Fig. 4 shows, for the same embodiment as in the preceding Figures, a 3D sketch of the housing H and the inserts I1, I2 prior to insertion into the first fluid opening O1 of the housing H.

The first insert I1 may be formed by one single monolithic polymeric element forming the measuring tube MT the first ultrasound reflector holder RH1, whilea metallic ultrasound reflector R1 element is attached to the first ultrasound reflector holder RH1. However, the first insert I1 can still be formed in one single manufacturing step of moulding the monolithic polymeric element together with the metallic ultrasound reflector R1. With the rigid polymeric structure connecting the first ultrasound reflector holder RH1 and the flange FL1 of the first insert I1, a high position precision of the first ultrasound reflector R1 can be obtained. The first ultrasound reflector holder RH1 is seen in this embodiment to be fluid dynamically shaped so as to provide a low fluid pressure loss.

The second insert I2 is may be fromed by two separate elements: one single polymeric element forming the second ultrasound reflector holder RH2 and a second element being a metallic ultrasound reflector R2 element which is attached to a reflector holding structure of the second ultrasound reflector holder RH2. The second insert I2 can be manufactured with these two elements in one moulding process.

Figs. 5a-5c show details of the second insert I2 second ultrasound reflector holder RH2. The second insert I2 has four curved fins FNS shaped to provide a fluid flow straightening effect. The four fins FNS further serve to structurally connect a ringshaped flange FL2 at one end and a reflector holding structure at the opposite end. The flange FL2 forms a plane surface perpendicular to a longitudinal direction, which surface is arranged to be fixed to the second face F2 of the flow tube FT, e.g. in a fluid tight manner. At the flange FL2 end, the four fins FNS are shaped so as to form two parallel plate structures, seen in the flow direction, whereas the fins FNS are curved to as form four plates equally angular distributed at the reflector holding structure, seen in a flow direction. The reflector holding structure serves to fix the second ultrasound reflector R2 in an angle of 45°, so as to allow reflection of ultrasound between a direction along the longitudinal direction of the flow tube FT and a direction perpendicular to the longitudinal direction of the flow tube FT. The reflector holding structure itself is shaped smooth, seen in the flow direction, so as to provide a low fluid pressure loss. The flange FL2 has an indentation serving to engage with a matching protrusion of the inner part of the flow tube FT (not visible), so as to fix angular orientation of the second insert I2 in relation to the flow tube FT.

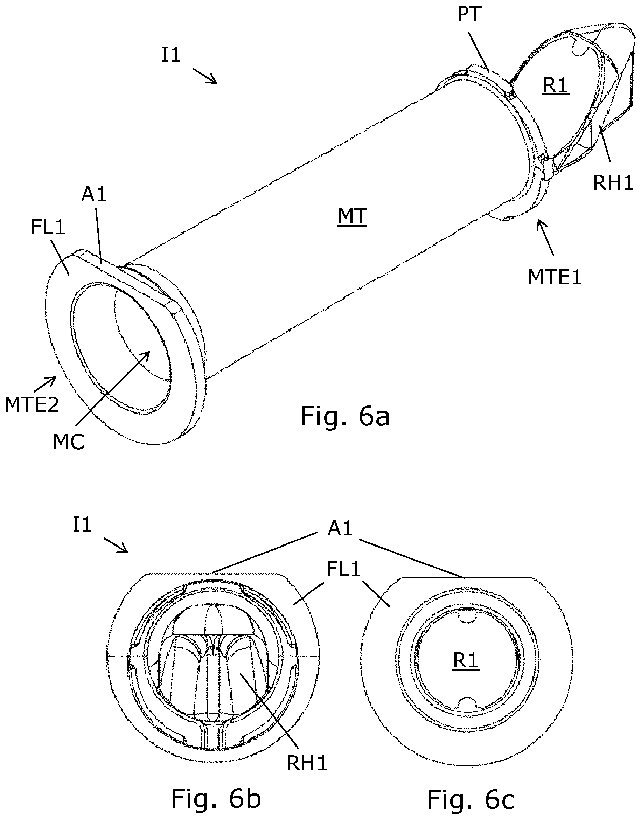

Figs. 6a-6c shows in further details the first insert I1. The straight measuring tube MT has a constant inner circular cross-sectional connects the first ultrasound reflector holder RH1 at one end MTE1 and connects the flange FL1 at the opposite end MTE2 of the measuring tube MT. The measuring tube MT hereby forms a straight fluid flow measuring channel MC with a circular cross-sectional area. The flange FL1 forms a plane surface perpendicular to a longitudinal direction, which surface is arranged to be fixed to the first face F1 of the flow tube in a fluid tight manner so as to avoid any fluid bypassing the fluid flow measuring channel MC. The flange FL1 has a flat portion A1 of its periphery helping to fix the first insert I1 angularly during insertion into the flow tube FT via engagement with a matching flat portion of the inner side of the flow tube FT. Further, at the first end MTE1 of the measuring tube MT, a flange with protrusions PT serve to radially support the first end MTE1 of the first insert I1 inside the flow tube FT, and thereby helps to ensure a precise and stable position of the ultrasound reflector R1 in the flow channel FC. Preferably, the protrusions PT are dimensioned so at to provide a minimal clearing so to avoid the protrusions being in direct contact with the inner wall of the flow tube FT. Further, it is seen that the protrusions PT are angular distributed on the flange, thereby allowing fluid to enter a cavity formed between the measuring tube MT and the inner wall of the flow tube FT.

The first reflector holder RH1 serves to fix the first ultrasound reflector R1 in an angle of 45°, so as to allow reflection of ultrasound between a direction along the longitudinal direction of the flow tube FT and a direction perpendicular to the longitudinal direction of the flow tube FT. The reflector holding structure itself is shaped smooth, seen in the flow direction, so as to provide a low fluid pressure loss. At one end, the first reflector holder RH1 is structurally connected to the first end MTE1 of the measuring tube MT at a limited part of the periphery of the measuring tube MT only, thereby reducing unnecessary space occupying the cross-sectional area of the flow tube FT, thus helping to reduce fluid pressure loss. To further reduce fluid pressure loss, the first reflector holder RH1 has a smooth fin shaped structure behind the first ultrasound reflector R1, seen in the fluid flow direction.

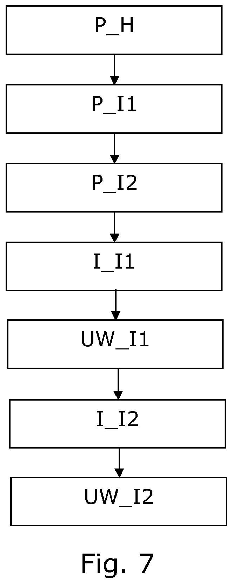

Fig. 7 shows steps of a preferred method of manufacturing an ultrasonic flow meter, e.g. the embodiments described in the foregoing. The method comprises providing P_H the housing H of a polymeric material, e.g. in one single moulding process, providing P_I1 the first insert I1 of a polymeric material, and providing P_I2 the second insert 12. After the housing H and the first and second inserts I1, I2 have been provided, preferably all by respective moulding processes, the inserts I1, I2 are to be inserted into the flow tube FT of the housing H. First step is inserting I_I1 the first insert I1 in the first fluid opening O1 of the housing H, so that the flange FL1 structurally connected to the measuring tube MT faces the first face F1. Next step is fixing UW_I1 the flange FL1 of the first insert I1 to the first face F1 by means of ultrasonic welding. Next step is inserting I_I2 the second insert in the first fluid opening (O1) of the housing H, so that a flange structurally connected to the second ultrasound reflector holder faces the second face F2. Next step is fixing UW_I2 the flange FL2 of the second insert I2 to the second face F2 by means of ultrasonic welding.

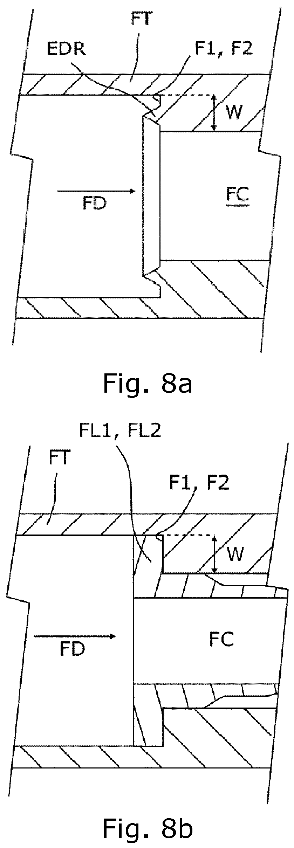

Figs. 8a and 8b show sectional views of a detail of the flow tube FT as an example of one possible shape of the first and second faces F1, F2 for the use of ultrasonic welding for fixing the flanges FL1, FL2 of the first and second inserts to the faces F1, F2 in the flow tube FT. Fig. 8a illustrates the faces F1, F2 of the flow tube FT before insertion and ultrasonic welding of the inserts. The faces F1, F2 are provided with energy directors EDR, i.e. raised beads of material, e.g. having a triangular shape as illustrated, with the purpose of melting during the ultrasound welding process. Alternatively, the flanges FL1, FL2 of the first and second inserts may be provided with such energy directors on the side facing the face F1, F2 of the flow tube FT. The primary function of the energy director EDR is to concentrate ultrasonic energy to rapidly initiate the softening and melting of the joining surface. The energy director EDR permits rapid welding while achieving maximum strength. Especially, a butt-joint type of energy director EDR with a triangular shape may be used. In case of using PPS for the inserts and housing, i.e. a semi-crystalline material, a height of energy director EDR of at least 0.4 mm is preferred. The width W of the first and second faces may be selected to be such as 1-3 mm, depending on the overall size of the flow tube FT.

Fig. 8b illustrates the first and second faces F1, F2 after the ultrasonic welding process has been performed. Here it is seen that the energy director EDR has melted away and the first and second faces F1, F2 form respective surfaces, which are perpendicular to or substantially perpendicular to a longitudinal direction or flow direction FD of the flow tube FT. Hereby, a precise and stable fixing of the inserts in the longitudinal direction or flow direction FD of the flow tube FT is provided. Furthermore, by such ultrasonic welding of especially the first insert, it is possible to provide a fluid tight connection between the flow tube FT and the first insert, thereby ensuring that no fluid will bypass the measuring section in the measuring tube.

To sum up, the invention provides an ultrasonic flow meter for measuring a flow rate of a fluid. The meter has a polymeric housing H forming a flow tube with first and second fluid openings O1, 02. A first face F1 is formed in the flow tube by a reduction in cross-sectional area at a distance d1 from the first fluid opening O1. A second face F2 is formed by a reduction in cross-sectional area at a second distance d2 from the first fluid opening O1, wherein d1>d2, and wherein a cross-sectional area at d1 is smaller than a cross-sectional area at d2. A first insert I1 forms a measuring tube MT and a first ultrasound reflector holder RH1 arranged outside a first end of the measuring tube MT. A flange FL1 of the first insert I1 is arranged to face the first face F1. A second insert I2 forms a second ultrasound reflector holder RH2. A flange FL2 of the second insert I2 is arranged to face the second face F2. First and second ultrasound transducers are positioned in the housing H and being arranged to transmit and receive ultrasonic signals through a fluid flow measuring channel MC formed by the measuring tube MT via first and second ultrasound reflectors R1, R2 fixed at the respective ultrasound reflector holders RH1, RH2, so as to allow ultrasonic measurement of a fluid flowing through the measuring tube MT.

Although the present invention has been described in connection with the specified embodiments, it should not be construed as being in any way limited to the presented examples. The scope of the present invention is to be interpreted in the light of the accompanying claim set. In the context of the claims, the terms "including" or "includes" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. An ultrasonic flow meter arranged to measure a flow rate of a fluid, the meter comprising
- a housing (H) of a polymeric material, wherein the housing (H) comprises a flow tube (FT) forming a flow channel (FC) with first and second fluid openings (O1, O2) at each end of the flow tube (FT), wherein a first face (F1) is formed in the flow tube (FT) by a reduction in cross-sectional area of the flow channel (FC) at a first distance (d1) from the first fluid opening (O1), wherein a second face (F2) is formed in the flow tube (FT) by a reduction in cross-sectional area of the flow channel (FC) at a second distance (d2) from the first fluid opening (O1), wherein the first distance (d1) is larger than the second distance (d2), and wherein a cross-sectional area of the flow channel (FC) at the first distance (d1) is smaller than a cross-sectional area of the flow channel (FC) at the second distance (d2),
- a first insert (I1) of a polymeric material, the first insert (I1) forming a measuring tube (MT) and a first ultrasound reflector holder (RH1) arranged outside a first end (MTE1) of the measuring tube (MT), wherein a flange (FL1) structurally connected to the measuring tube (MT) is arranged to face the first face (F1),
- a second insert (12) of a polymeric material, the second insert (12) forming a second ultrasound reflector holder (RH2) structurally connected to a flange (FL2) arranged to face the second face (F2), and
further comprising first and second ultrasound transducers arranged to transmit and receive ultrasonic signals through a fluid flow measuring channel (MC) formed by the measuring tube (MT) via first and second ultrasound reflectors (R1, R2) fixed at the respective ultrasound reflector holders (RH1, RH2), so as to allow ultrasonic measurement of a fluid flowing through the measuring tube (MT).

2. Flow meter according to claim 1, wherein the flange (FL1) of the first insert (I1) is fixed to the first face (F1) by means of ultrasonic welding.

3. Flow meter according to claim 1 or 2, wherein the flange (FL2) of the second insert (12) is fixed to the second face (F2) by means of ultrasonic welding.

4. Flow meter according to any of the preceding claims, wherein the first and second inserts (I1, I2) comprise respective portions (A1, A2) serving to engage with matching portions of the flow tube (FT) of the housing (H), so as to determine angular position of the first and second inserts (I1, I2) in the flow tube (FT).

5. Flow meter according to any of the preceding claims, wherein the first and second faces (F1, F2) form respective surfaces which are perpendicular to or substantially perpendicular to a longitudinal direction of the flow tube (FT).

6. Flow meter according to any of the preceding claims, wherein the first and second faces (F1, F2) form respective circumferential faces inside the flow tube (FT), wherein the first and second faces (F1, F2) face toward the first fluid opening (O1), so as to allow insertion of the first and second inserts (I1, I2) from the first fluid opening (O1.

7. Flow meter according to any of the preceding claims, wherein the first insert (I1) has one or more outer protrusions (PT) at or near the first end (MTE1) of the measuring tube (MT), so as to control a radial position of the first end (MTE1) of the measuring tube (MT) inside the flow tube (FT).

8. Flow meter according to any of the preceding claims, wherein the measuring tube (MT) and the flow tube (FT) of the housing (H) are shaped so as to provide a space between the measuring tube (MT) and the flow tube (FT), wherein said space is arranged to be fluid filled during operation of the flow meter.

9. Flow meter according to any of the preceding claims, wherein the flange (FL1) of the first insert (I1) is fixed to the first face (F1) so as to provide a fluid tight connection to the flow tube (FT).

10. Flow meter according to any of the preceding claims, wherein the first ultrasound reflector holder (RH1) and the measuring tube (MT) are formed as one single monolithic element.

11. Flow meter according to any of the preceding claims, wherein the second (12) insert forms a flow straightening structure (FNS) arranged to straighten flow of fluid passing the straightening structure.

12. Flow meter according to any of the preceding claims, a third face (F3) is formed in the flow tube (FT) by a reduction in cross-sectional area of the flow channel (FC) at a third distance (d3) from the first fluid opening (O1), wherein the second distance (d2) is larger than the third distance (d3), wherein a cross-sectional area of the flow channel (FC) is smaller at the second distance (d2) than a cross-sectional area of the flow channel at the third distance (d3).

13. Flow meter according to any of the preceding claims, wherein the measuring tube (MT) forms a straight fluid flow measuring channel (MC) with a circular cross-sectional area.

14. A method of manufacturing an ultrasonic flow meter according to any of the preceding claims, the method comprises
- providing (P_H) the housing (H),
- providing (P_I1) the first insert (I1),
- providing (P_I2) the second insert (I2),
- inserting (I_I1) the first insert (I1) in the first fluid opening (O1), so that the flange (FL1) structurally connected to the measuring tube (MT) faces the first face (F1), and
- inserting (I_I2) the second insert (12) in the first fluid opening (O1), so that the flange (FL2) structurally connected to the second ultrasound reflector holder (RH2) faces the second face (F2).
